Europäisches Patentamt

European Patent Office

Office européen des brevets

(11) Publication number: 0 373 391
A1

## (12) EUROPEAN PATENT APPLICATION

(21) Application number: 89121526.1

(22) Date of filing: 21.11.89

(51) Int. Cl.⁵: B01J 20/32, B01D 15/08

(30) Priority: 22.11.88 CS 7640/88

(43) Date of publication of application:
20.06.90 Bulletin 90/25

(84) Designated Contracting States:
DE FR GB IT NL SE

(71) Applicant: CESKOSLOVENSKA AKADEMIE
VED
Narodni 3
Praha 1(CS)

(72) Inventor: Vaisar, Tomás, Dr.
Dostálova 16
Praha 6(CS)
Inventor: Vanêk, Tonás, Dr.
Snêzenkova 15
Praha 10(CS)
Inventor: Smolková, Eva, Dr. Prof. Dr. Sc.
Mánesova 62
Praha 2(CS)

(74) Representative: Patentanwälte Beetz sen. -
Beetz jun. Timpe - Siegfried -
Schmitt-Fumian- Mayr
Steinsdorfstrasse 10
D-8000 München 22(DE)

(54) Sorbents on cyclodextrin basis.

(57) The invention pertains to a sorbent based on cyclodextrin in which a cyclodextrin selected from $\alpha$-, $\beta$- and $\gamma$-cyclodextrins and their derivatives with alkylated, arylated or acylated hydroxy groups, is directly covalently bonded to a carrier.

The sorbent can be used, e.g., as a stationary phase in liquid chromatography, thin-layer chromatography, and the like.

EP 0 373 391 A1

## Sorbents on cyclodextrin basis

The invention pertains to sorbents based on cyclodextrin.

Universal sorbents, such as silica gel modified with octadecylsilane (so called C-18) or other types of silica gel modified with alkyl groups, are not optimally suited for high-performance liquid chromatography. In this field, there is a tendency to use sorbents with modified properties in order to increase their selectivity in the separation of certain types of compounds. Such sorbents are, e.g., aminopropyl or cyanopropyl modified silica gels. Sorbents for the separation of enantiomers, various polymeric sorbents, sorbents for ion-exchange chromatography, and also sorbents for bioaffinity chromatography, represent further large groups of usual sorbents. One of the types of selective sorbents recently used is silica gel with bonded cyclodextrin, which exhibits selectivity to a number of structurally isomeric compounds, including several optical isomers of barbiturates and amino acid derivatives.

Heretofore, the following three types of sorbents with bonded cyclodextrin have been used:

1) Cyclodextrin bonded to silica gel through a $C_{3-20}$-linking chain, which does not contain a hydrolytically unstable bond (US-A-4 539 399). For the preparation, silica gel modified with glycidopropyl silane and the sodium salt of cyclodextrin are used. This sorbent is commercially available (Cyclobond, Advanced Separation Technologies, Ltd.). This product is hydrolytically stable, but the absence of heteroatoms in the linking chain makes liquid-chromatographic separation impossible in some cases.

2) Cyclodextrin bonded to silica gel obtained by reaction of cyclodextrin in the form of the 6-monoethylenediamino derivative to silica gel modified with a chain with a succinyl end group, which is the reaction centre for the bonding of cyclodextrin (M. Tanaka et al., J. Chromatog. 370, 283, 1986).

3) Cyclodextrin bonded to silica gel obtained by reaction of cyclodextrin in the form of the monosilane derivative to silica gel modified with 3-aminopropylsilane, which may be further modified with ethylenediamine or diethylenetriamine (K. Fujimura et al., J. Chromatog. 350, 371, 1985).

The second and third types of sorbents are less hydrolytically stable than the first one, which manifested itself in a gradual deterioration of the sorbent properties during application. Moreover, the bonding of cyclodextrin through a linking chain (spacer) leads to a sterical mobility and a hardly definable position of the molecule.

Also other methods for bonding cyclodextrin to silica gel are known, e.g. by polymerizing cyclodextrin or bonded to a polymeric carrier. However, all prior art sorbents are based on cyclodextrin bonding through a spacer and not direct bonding. The main disadvantage of these known sorbents consists in the low strength of bonds, which is unfavourably for applications in liquid chromatography.

It is the object of the present invention to provide a new sorbent on cyclodextrin basis which avoids the disadvantages described above which can be used for liquid chromatography, thin-layer chromatography and solid-phase extraction.

The above object is achieved according to the claims. The dependent claims relate to preferred embodiments.

The sorbent according to the present invention on the basis of cyclodextrin bonded to a carrier is characterized in that cyclodextrin selected from $\alpha$-, $\beta$- and $\gamma$-cyclodextrins and their alkyl, aryl and/or acyl derivatives is directly covalently bonded to the carrier.

Accordingly, in the new sorbents according to the invention, cyclodextrin is not bonded to the carrier through any linking chain or spacer. The molecules of cyclodextrin are thus firmly anchored to the carrier and assume a defined position.

The cyclodextrin is selected from the group comprising $\alpha$-, $\beta$- and $\gamma$-cyclodextrins and their derivatives with alkylated, arylated or acylated hydroxy groups.

Suitable alkyl groups are methyl, ethyl, and the like; suitable aryl groups include phenyl and substituted phenyl groups and the like; acyl groups include formyl, acetyl, and the like.

Compounds or materials comprising hydroxy groups are advantageously used as carriers, for example, silica gel, macroporous copolymers such as copolymers of 2-hydroxyethyl methacrylate with ethylene dimethacrylate, and the like.

The sorbents according to the invention may be advantageously produced by activating the hydroxy groups of the carrier by halogenation agent and then allowing the activated carrier to react with cyclodextrin selected from the group comprising $\alpha$-, $\beta$- and $\gamma$-cyclodextrins and their derivatives with alkylated, arylated and/or acylated hydroxy groups; the reaction proceeds at 70 to 104 °C in the presence of a weak base, preferably in a medium of dimethylformamide and/or pyridine. In addition to these solvents, which have also base character; also benzene, toluene and dimethylsulfoxide may be used.

The sorbents according to the invention can be advantageously utilized in various ways, e.g., as a stationary phase in liquid chromatography, in thin-layer chromatography, for preliminary refining of samples by so-called solid-phase extraction, etc. In comparison with other types of sorbents, an advantage of the sorbents according to the invention is the possible application for the separation of optical isomers.

The invention will be illustrated in detail with reference to preparation examples.

## Example 1

Silica gel with particles of irregular shape and a particle size of 10 μm is thoroughly dried. Drying is carried out in vacuo over phosphorus pentoxide at 110 °C. The dried silica gel is then refluxed under normal pressure with thionyl chloride in dry benzene with exclusion of atmospheric moisture for 24 hours. The solid reaction products are separated, washed with dry benzene and dried in vacuo over phosphorus pentoxide in the same way as the initial silica gel.

β-Cyclodextrin is dried prior to the reaction in vacuo at 105 °C over phosphorus pentoxide for 24 hours.

The bonding of the cyclodextrin to the silica gel is carried out in pyridine using 2 weight parts of cyclodextrin and 3 weight parts of the activated carrier. The cyclodextrin is dissolved in the given solvent, and the activated carrier is added. The reaction mixture is then heated under reflux at 95 °C for 10 hours. It is necessary to exclude the access of atmospheric moisture during the reaction. After the reaction, the solid reaction products are separated, thoroughly washed in the same solvent which was used for the reaction and with methanol, water and eventually with methanol, and dried in vacuo at 60 °C.

## Example 2

A sorbent is prepared analogously to example 1, with the exception that a silica gel having spherical particles of a particle diameter of 8 μm is used. The reaction is carried out at 80 °C in benzene in the presence of the equimolecular amount of triethylamine.

## Example 3

A sorbent is prepared analogously to example 1.

A macroporous copolymer of 2-hydroxyethyl methacrylate (HEMA) with ethylene glycol dimethacrylate (Separon HEMA) is used as carrier instead of silica gel. The reaction is carried out in toluene at 104 °C in the presence of the equimolecular amount of triethylamine.

## Example 4

A sorbent is prepared according to the same procedure as in example 1, with the exception that the silica gel is activated by reaction with thionyl bromide.

## Example 5

A sorbent is prepared according to the same procedure as in example 1, with the exception that γ-cyclodextrin is used instead of β-cyclodextrin.

## Example 6

A sorbent is prepared according to the same procedure as in example 1, with the exception that α-cyclodextrin is used instead of β-cyclodextrin.

## Example 7

A sorbent is prepared according to the same procedure as in example 1, with the exception that acylated β-cyclodextrin is used.

## Example 8

A sorbent is prepared according to the same procedure as in example 1, with the exception that a silica gel with spherical particles having a particle size of 8 μm and 2,3-dimethyl-α-or -β- or -γ-cyclodextrin are used. The reaction is carried out at 80 °C in benzene in the presence of the equimolecular amount of triethylamine.

## Example 9

A sorbent is prepared according to the same procedure as in example 3, with the exception that the activation of the carrier is carried out at 70 °C, and dimethylformamide is used as the solvent.

## Example 10

A sorbent is prepared according to the same procedure as in example 3, with the exception that the cyclodextrin is bonded to the carrier at 95 °C in pyridine serving as the reaction medium and base.

## Example 11

A sorbent is prepared according to the same procedure as in example 10, with the exception that the carrier is activated by reaction with thionyl bromide.

## Example 12

A sorbent is prepared according to the same procedure as in example 1, with the exception that $\gamma$-cyclodextrin is used instead of $\beta$-cyclodextrin, and the carrier of example 3 is used instead of silica gel.

## Example 13

A sorbent is prepared according to the same procedure as in example 3, with the exception that $\alpha$-cyclodextrin is used instead of $\beta$-cyclodextrin.

## Example 14

A sorbent is prepared according to the same procedure as in example 1, with the exception that acetylated $\beta$-cyclodextrin and the carrier of example 3 are used.

Covalent bonding of cyclodextrin to the carrier occurred in all examples. The hydrolytic stability was tested by interaction of the carrier having covalently bonded cyclodextrin with buffer solutions of a pH varied in the range of 3 to 10 for 2 months, and qualitative comparison of the $^{13}$C-NMR spectra measured before and after interaction, which confirmed the hydrolytical stability.

## Claims

1. Sorbents on the basis of a carrier and cyclodextrin bonded to the carrier, characterized in that one or more cyclodextrins selected from $\alpha$-, $\beta$- and $\gamma$-cyclodextrins and their derivatives with alkylated, arylated and/or acylated hydroxy groups are directly covalently bonded to the carrier.

2. Sorbents according to claim 1, characterized in that the cyclodextrin derivatives are methyl, ethyl, phenyl, formyl and/or acetyl derivatives of $\alpha$-, $\beta$- and/or $\gamma$-cyclodextrin.

3. Sorbents according to claim 1 and 2, characterized in that the cyclodextrin derivative is 2,3-dimethyl-$\alpha$-cyclodextrin, 2,3-dimethyl-$\beta$-cyclodextrin or 2,3-dimethyl-$\gamma$-cyclodextrin.

4. Sorbents according to claims 1 to 3, characterized in that the carrier is silica gel or a macroporous copolymer.

5. Sorbents according to claims 1 to 4, characterized in that the carrier is a copolymer of 2-hydroxyethyl methacrylate with ethylene glycol dimethacrylate.

6. A method for preparing the sorbents according to claims 1 to 5, comprising the step of binding cyclodextrin or a derivative thereof to a carrier, characterized by
- use of a carrier comprising hydroxy groups,
- activating the hydroxy groups of the carrier by reacting it with a halogenation agent; and
- reacting the activated carrier with a cyclodextrin selected from $\alpha$-, $\beta$- and $\gamma$-cyclodextrins and their alkyl, aryl and acyl derivatives.

7. The method according to claim 6, characterized in that silica gel or a macroporous copolymer is used as carrier.

8. The method according to claims 6 and 7, characterized in that a copolymer of 2-hydroxyethyl methacrylate with ethylene glycol dimethacrylate is used as carrier.

9. The method according to claims 6 to 8, characterized in that thionyl chloride or thionyl bromide is used as halogenation agent.

10. The method according to claims 6 to 9, characterized in that the reaction of the activated carrier with the cyclodextrin is carried out at a temperature of 70 to 104 $^{\circ}$C in the presence of a weak base, preferably pyridine, dimethylformamide and/or triethylamine.

11. The method according to claims 6 to 10, characterized in that the reaction of the activated carrier with the cyclodextrin is carried out in an organic solvent, which is preferably also a weak base, or preferably in benzene, toluene and/or dimethylsulfoxide.

12. Use of the sorbents according to claims 1 to 5 as stationary phase in liquid chromatography, in thin-layer chromatography, and for solid-phase extraction, preferably for the separation of optical isomers.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN, vol. 9, no. 32 (C-265)[1755], 9th February 1985; JP-A-59 177 133 (WAKO JUNYAKU KOGYO K.K.) 06-10-1984 * Abstract * --- | 1,2,4, 12 | B 01 J 20/32 B 01 D 15/08 |
| A | DERWENT, accession, no. 86-194839, Questel Telesystems (WPIL), Derwent Publications Ltd, London, GB; & JP-A-61 129 566 (WAKO PURE CHEM. IND) * Abstract * --- | 1-4,12 | |
| D,A | US-A-4 539 399 (D.W. ARMSTRONG) * Claims 1,10,14; examples 1,8 * --- | 1,4,6,7 ,10-12 | |
| A | US-A-4 446 275 (K. FILKA) * Column 1, line 20 - column 2, line 28 * ----- | 1,4,5, 12 | |
| | | | TECHNICAL FIELDS SEARCHED (Int. Cl.5) B 01 J B 01 D |

The present search report has been drawn up for all claims

| Place of search | Date of completion of the search | Examiner |
|---|---|---|
| THE HAGUE | 01-03-1990 | HILGENGA K.J. |

EPO FORM 1503 03.82 (P0401)